# EUROPÄISCHE PATENTSCHRIFT

(11) **EP 0 305 735 B1**
(45) Veröffentlichungstag und Bekanntmachung des Hinweises auf die Patenterteilung: **24.11.1993**
(21) Anmeldenummer: 88112174.3
(22) Anmeldetag: 27.07.1988
(51) Int. Cl.: B23Q 1/02, B23Q 1/14, B23Q 37/00, B23Q 39/00

(54) **Werkzeugmaschine zur Bearbeitung von Werkstücken mittels rundlaufender Werkzeuge**
Machine tool provided with rotating tools for machining work pieces
Machine-outil pour l'usinage de pièces avec des outils rotatifs

(30) Priorität: 01.09.1987 DE 3729162
(43) Veröffentlichungstag der Anmeldung: 08.03.1989
(73) Patentinhaber: GÜHRING AUTOMATION GMBH & CO., D-72510 Stetten (DE)
(72) Erfinder: Müller, Hans, D-7470 Albstadt-1 (DE)
(74) Vertreter: Tiedtke, Harro, Dipl.-Ing.

(56) Entgegenhaltungen:
- EP-A- 0 030 047
- EP-A- 0 172 299
- WO-A-81/00533
- CH-A- 365 598
- DE-A- 3 236 356
- DE-B- 2 053 749
- FR-A- 1 602 333
- FR-A- 2 125 622
- US-A- 3 641 872
- US-A- 4 115 956

## Beschreibung

Die Erfindung bezieht sich auf eine Werkzeugmaschine zur Bearbeitung von Werkstücken mittels rundlaufender Werkzeuge, wie z. B. Schleif- oder Fräswerkzeuge, gemäß dem Oberbegriff des Patentanspruchs 1.

Aus der US-PS 4 115 956, die als nächstliegender Stand der Technik angesehen wird, ist eine Werkzeugmaschine dieser Art bekannt, die als numerisch steuerbare Schleifmaschine ausgestaltet ist. Die Bewegungsachsen dieser Schleifmaschine sind sämtlich programmgesteuerte Simultanachsen, wodurch eine automatische Fertigung des Werkstücks in einem Programmablauf ermöglicht wird.

Mit dieser Maschine ist zwar ein programmgesteuertes Schleifen von Werkstücken in Form von rundlaufenden Werkzeugen beliebiger Geometrie möglich. Es hat sich jedoch gezeigt, daß bei dieser Werkzeugmaschine der Aufwand für die Programmierung oftmals übermäßig groß sein mußte, um aufeinanderfolgende Bearbeitungsschritte mit geänderter Relativlage zwischen Schleifscheibe und Werkstück mit ausreichender Präzision durchführen zu können. Dies konnte bei der Bearbeitung von sehr komplizierten Werkstücken dazu führen, daß ein wirtschaftlicher Einsatz dieser Werkzeugmaschine unter Ausnützung der numerischen Steuerung nicht mehr möglich war.

Der Erfindung liegt die Aufgabe zugrunde, eine Werkzeugmaschine gemäß dem Oberbegriff des Patentanspruchs 1 zu schaffen, mit der unter Anhebung der Wirtschaftlichkeit des Bearbeitungsverfahrens sämtliche Werkstückflächen in einem Arbeitszyklus programmgesteuert gefertigt werden können.

Diese Aufgabe wird durch die Merkmale von Patentanspruch 1 gelöst.

Erfindungsgemäß wird ein universell einsetzbares Bearbeitungszentrum geschaffen, bei dem unter zeitlicher Steuerung eine Vielzahl von Arbeitsaggregaten, die nicht auf eine bestimmte Gattung festgelegt sind, in Eingriff mit dem zu bearbeitenden Werkstück bringbar sind. Dabei ist der Aufbau erfindungsgemäß so getroffen, daß sich eine extrem sichere und leichte Programmierbarkeit der Simultan- und Stellachsen ergibt. Dies ist darauf zurückzuführen, daß über die vierte Translationsachse W die Einstellung des jeweiligen Arbeitsaggregats derart erfolgen kann, daß der betreffende Eingriffspunkt mit dem Werkstück in die Achse des Werkzeug-Drehtischs bringbar ist. Dies hat zur Folge, daß eine Bewegung des Werkzeug-Drehtischs um die entsprechende Drehachse B den Eingriffspunkt mit dem Werkzeug unberührt läßt, so daß komplexe Koordinatentransformationen entfallen und die Steuerung zur Durchführung der verschiedenen Arbeitsabläufe wesentlich vereinfacht wird. Zwar ist im Vergleich zu der bekannten Maschine gemäß US-PS 4 115 956 der konstruktionstechnische und antriebstechnische Aufwand größer. Es hat sich jedoch gezeigt, daß dieser einmalige Mehraufwand bei weitem durch die Kostenersparnis aufgewogen wird, die durch die einfachere Programmierbarkeit der Maschine begründet ist. Dabei ergibt sich der zusätzliche Vorteil, daß mit der erfindungsgemäßen Werkzeugmaschine nicht nur Schleifvorgänge durchgeführt werden können, sondern auch andere Bearbeitungsverfahren, wie z. B. das Spanen mit definierter Schneide (Bohren, Fräsen usw.) anwendbar sind, wobei erforderlichenfalls das Wechseln bzw. Umpositionieren des Werkstücks, die Durchführung von Zwischenmessungen usw. vorgenommen werden können. Auf diese Weise kann selbst ein komplizierter gestaltetes Werkstück beliebiger Form unter kontinuierlicher Programmsteuerung vom Rohling zum Endprodukt bearbeitet werden , ohne die Werkzeugmaschine wechseln zu müssen, wodurch die Gesamt-Fertigungsgenauigkeit wesentlich verbessert wird. Der Revolverkopf mit der vorzugsweise identischen Gestaltung der Aufnahmen für die verschiedenen Arbeitseinheiten sorgt dafür, daß die Positionierungsgenauigkeit der aufeinanderfolgend mit dem Werkstück in Eingriff bringbaren Werkzeuge bzw. Aggregate extrem hoch gehalten wird.

Weiterhin ist aus der EP-A-0 172 299 eine Werkzeugmaschine mit einem mehrere Werkzeuge tragenden Revolverkopf bekannt. Die Werkzeuge sind starr mit dem Revolverkopf verbunden, der entlang zweier Translationsachsen verschiebbar ist.

Der Aufbau der erfindungsgemäßen Werkzeugmaschine erlaubt selbstverständlich die Nutzung herkömmlicher Werkzeugwechselsysteme, um beispielsweise die gerade nicht im Arbeitsprozeß befindlichen Arbeitsaggregate laufend umrüsten zu können. Die Schnittstelle für das Auswechseln des Werkzeugs bzw. des Aggregats kann dabei in verschiedene Bereiche gelegt werden, wobei man sich am jeweiligen Produktionsablauf orientiert. Besonders vorteilhaft ist es, die Schnittstelle gemäß Patentanspruch 2 zwischen Aufnahme und Werkzeug-Drehtisch zu legen. Auf diese Weise können während der Bearbeitung eines Werkstücks bereits weitere Arbeitseinheiten außerhalb des Bearbeitungszentrums zusammengestellt und so weit vorbereitet werden, daß nach dem Ankoppeln an den Werkzeug-Drehtisch in kürzester Zeit die angestrebte Positionierung erreicht ist.

Es hat sich herausgestellt, daß insbesondere mit der Weiterbildung gemäß Patentanspruch 3 die Programmierbarkeit des Bearbeitungszentrums außerordentlich vereinfacht werden kann. Der Schnittpunkt zwischen den Drehachsen A und B des Werkstück-Drehtischs und des Werkzeug-Drehtischs stellt dadurch, daß über die vierte Translationsachse W der jeweilige Eingriffspunkt der Arbeitseinheit mit dem Werkstück in die Achse B des Werkzeug-Drehtischs bringbar ist, den idealen Ausgangs-Nullpunkt für die Programmierung der Maschine dar, wodurch sich nicht nur einfachere Programmschritte ergeben. Diese einfacheren Programmschritte können durch die beim Erfindungsgegenstand vorgesehenen Bewegungsfreiheitsgrade der Maschinen-Module unmittelbar in einfache Bewegungen des Werkstücks bzw. des Arbeitsaggregats umgesetzt werden. Dies ist letztlich darin begründet, daß die Anzahl der programmgesteuerten Achsen gegenüber dem Stand der Technik angehoben ist, so daß für einen erforderlichen Programmschritt die jeweils günstigste programmgesteuerte Simultanachse ausgewählt werden kann.

Mit der Weiterbildung gemäß Patentanspruch 4 kann das Bearbeitungszentrum noch flexibler eingesetzt werden. Mit dieser Ausgestaltung ist es beispielsweise möglich, mit der betreffenden Arbeitseinheit auch Bohrvorgänge mit beliebiger Orientierung der Bohrung zum Werkstück durchzuführen.

Mit der Weiterbildung gemäß Patentanspruch 5 ist es sogar möglich, in ein und derselben Werkzeugmaschine eine Bohrbearbeitung und anschließend einen Innengewinde-Schneidvorgang durchzuführen.

Wenn das Bearbeitungszentrum gemäß Patentanspruch 6 mit einer Einrichtung zum selbsttätigen Wechseln der Arbeitseinheiten ausgestattet ist, ist es von Vorteil, wenn die Aufnahme der Arbeitseinheiten derart gewählt ist, daß die Eingriffspunkte dieser Arbeitseinheiten mit dem Werkstück in den oben erwähnten Schnittpunkt der Drehachsen der Drehtische bringbar sind.

Die Ausgestaltung gemäß Patentanspruch 8 erlaubt die Fertigung komplex gestalteter Körper. Der weitere programmgesteuerte Freiheitsgrad kann dabei von einer Simultan- oder Stellachse bereitgestellt sein.

Durch die Ausrichtbarkeit der Spanneinrichtung durch den zusätzlichen Freiheitsgrad gemäß Patentanspruch 9 wird der Programmablauf zur Bearbeitung der Funktionsflächen am Werkstück zusätzlich vereinfacht. Wenn die Bearbeitungsebene für das Werkstück beispielsweise mit einer programmgesteuerten Maschinenachse zusammenfällt, ergibt sich für bestimmte Bearbeitungsvorgänge eine einfachere Bewegungssteuerung, wodurch wiederum der Programmieraufwand vermindert und leichter überschaubar wird.

In den Unteransprüchen 13 bis 18 sind vorteilhafte Bestückungen des Bearbeitungszentrums mit Arbeitseinheiten angegeben, mit denen es gelingt, ein Werkstück ausgehend vom Rohling zum Endprodukt mit geringstem Aufwand zu bearbeiten. Dadurch daß man mit der erfindungsgemäßen Werkzeugmaschine überwiegend so arbeitet, daß der Eingriffspunkt zwischen Werkzeug und Werkstück auf der Drehachse B des Werkzeug-Drehtisches liegt, ist man hinsichtlich der Bestückung des Revolverkopfs sehr flexibel. Es zeigt sich nämlich, daß durch diese Verlegung des Bearbeitungspunktes die insbesondere bei einer Hochgeschwindigkeitsbearbeitung auftretenden Reaktionskräfte durchwegs innerhalb der Maschinenführungen wirken, wobei sogar die überwiegende Komponente der Schnittkraft auf die Achse des Revolverkopfs zu gerichtet ist. Dies erlaubt sogar die Bestückung des Revolverkopfs mit größeren Fräswerkzeugen, ohne die Stabilität des Revolverkopfs dadurch in Frage zu stellen. Durch die Lage des Eingriffspunktes in vorstehend beschriebener Art und Weise ergibt sich darüberhinaus der zusätzlich vorteilhafte Nebeneffekt einer günstigen Späneflugrichtung und einer vereinfachten Kühlmittelzufuhr, indem der zu kühlende Bereich räumlich quasi stationär ist.

Der Aufwand für eine durchgehende Bearbeitung eines Werkstücks ausgehend, vom Rohling zum Endprodukt kann zusätzlich vereinfacht werden, wenn gemäß Patentanspruch 19 vorgegangen wird. Durch den korrigierenden Eingriff eines einem bestimmten Arbeitsaggregat nachgeschalteten Meßaggregats werden Fehlerüberlagerungen so früh wie möglich eliminiert, wodurch die Präzision des Bearbeitungsvorgangs generell angehoben werden kann.

Grundsätzlich ist die Anzahl der Revolverarme des Revolverkopfs nicht beschränkt. Diese Zahl richtet sich vielmehr nach dem Schwerpunkt-Einsatz des Bearbeitungszentrums. Hochkomplexe Bauteile, die eine Vielzahl von Bearbeitungsoperationen und damit den Einsatz vieler verschiedener Werkzeuge erfordern, werden vorzugsweise mit einem Revolverkopf mit drei Revolverarmen gefertigt, wobei vorteilhafterweise dann eine automatische Wechselvorrichtung für die Arbeitseinheiten Anwendung findet. Größere Serien gängiger Werkstücke werden hingegen vorteilhaft mit einem Revolverkopf in der Ausgestaltung gemäß Patentanspruch 20 bearbeitet, wobei in diesem Fall regelmäßig ein mehrfaches Wechseln der Arbeitseinheiten nicht erforderlich ist.

Durch die Indexiereinrichtung gemäß Patentanspruch 21 können die auf den Revolverkopf einwirkenden Kräfte sicher abgefangen werden, ohne Positionierungsungenauigkeiten in Kauf nehmen zu müssen. Die Programmsteuerung für die Stellachse des Revolverkopfs wird vorzugsweise an die Indexiereinrichtung so angepaßt, daß bei Einrasten der Indexiereinrichtung ein Reset-Zustand der Programmsteuerung erreicht ist.

Weitere vorteilhafte Ausgestaltungen der Erfindung sind Gegenstand der übrigen Unteransprüche.

Nachstehend werden, anhand schematischer Zeichnungen Ausführungsbeispiele der Erfindung näher erläutert. Es zeigen:
- Figur 1: eine perspektivische Ansicht der Werkzeugmaschine;
- Figur: 2 eine Draufsicht der Werkzeugmaschine gemäß Figur 1, wobei zur Vereinfachung der Darstellung lediglich eine Arbeitseinheit gezeigt ist;
- Figur 3: eine Frontansicht einer Arbeitseinheit im weitergeschalteten Zustand des Revolverkopfs bei einer Blickrichtung entlang der Drehachse des zugehörigen Werkzeug-Drehtischs;
- Figur 4A bis 4D: perspektivische Einzelansichten der in Figur 1 gezeigten Arbeitseinheiten;
- Figur 5: eine perspektivische ausschnittsweise Ansicht einer über dem Revolverkopf angeordneten Energieversorgungseinrichtung;
- Figur 6: eine vergrößerte perspektivische Ansicht der Werkstückhalterung gemäß Figur 1;
- Figur 7: eine perspektivische Ansicht einer zweiten Variante der Werkstückhalterung;und
- Figur 8: eine perspektivische Ansicht einer weiteren Variante der Werkstückhalterung.

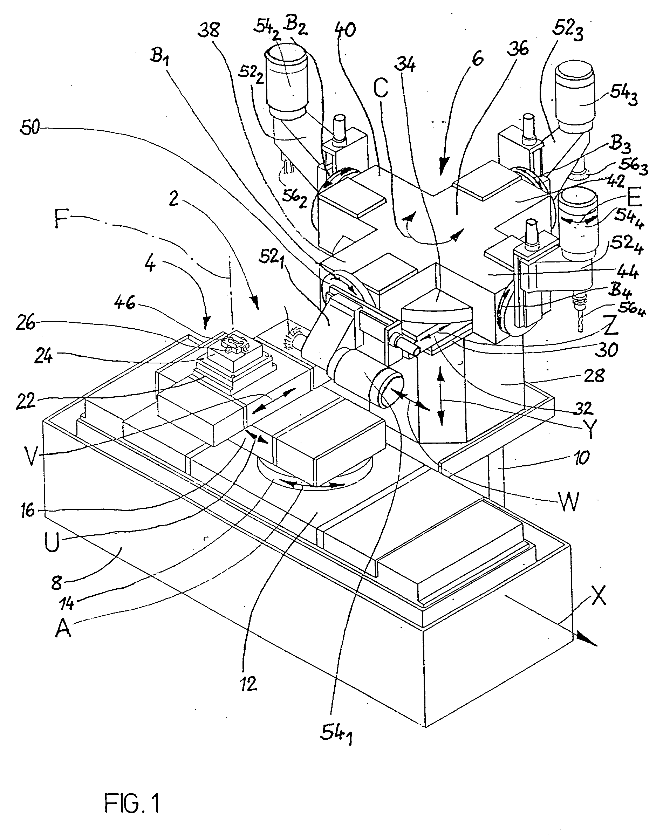

In Figur 1 ist mit dem Bezugszeichen 2 allgemein ein Universal-Maschinenzentrum zur Bearbeitung von Werkstücken mittels rundlaufender Werkzeuge, wie z. B. Schleif- oder Fräswerkzeuge, bezeichnet. Dieses Universal-Maschinen-bzw. -Bearbeitungszentrum ist dabei als CNC-Werkzeugmaschine ausgebildet, die eine Vielzahl von nachfolgend näher zu beschreibenden programmgesteuerten Simultan-und/oder Stellachsen hat.

Die Werkzeugmaschine weist einen Werkstückbereich 4 und einen Werkzeugträgerbereich 6 auf. Jeder dieser Bereiche hat ein Maschinenbett, wobei die Bezugsnummer 8 das Bett des Werkstücksbereichs 4 und die Bezugsnummer 10 das Bett des Werkzeugträgerbereichs 6 bezeichnet. Das Maschinenbett 8 ist mit dem Maschinenbett 10 zu einer Einheit fest verbunden.

Das Bett 8 des Werkstückbereichs 4 trägt einen ersten Translationsschlitten 12, der in einer Horizontalebene entlang einer ersten Hauptachse X bewegbar ist. Auf dem ersten Translationsschlitten sitzt ein Werkstück-Drehtisch 14, dem eine vertikale Drehachse A zugeordnet ist. Der Werkstück-Drehtisch wiederum trägt einen Kreuztisch 16 mit einem Längsschlitten 18 und einem Querschlitten 20 und den Bewegungsrichtungen U und V. Auf dem Kreuztisch 16 ist eine Werkstückhalterung 22 angebracht, die eine Spanneinrichtung aufweist. Bei der in Figur 1 gezeigten Ausführungsform trägt die Werkstückhalterung eine Spannbackeneinrichtung 24, die um eine vertikale Achse F einjustierbar ist, die einen zusätzlichen, programmgesteuerten Freiheitsgrad darstellt, der als programmgesteuerte Stell-oder Simultanachse ausgebildet sein kann. Mit 26 sind Spannklauen bzeichnet, die ein Werkstück 46 in Form eines Schnittstempels spannen.

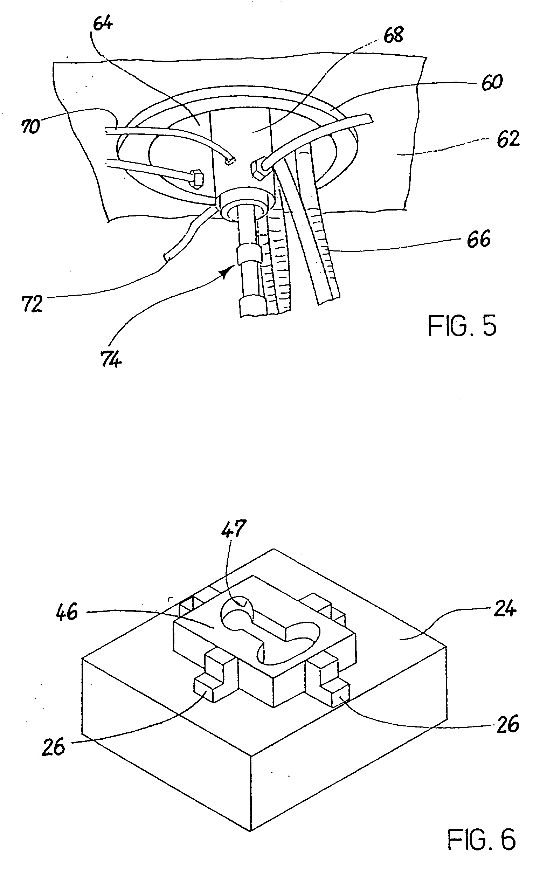

Die Spannbackeneinrichtung 24, die im einzelnen aus der Figur 6 hervorgeht, ist vorzugsweise auswechselbar an der Werkstückhalterung 22 befestigt, um eine möglichst große Vielfalt an Werkstücken bearbeiten und herstellen zu können. Das im Bearbeitungszentrum 2 herzustellende Werkstück 46 ist deutlicher in Figur 6 dargestellt. Hierbei handelt es sich um einen Werkstückklotz, in den unter Beibehaltung der Aufspannung programmgesteuert von der Grobbearbeitung zur Feinbearbeitung die hinterschnittenen Schnittflächen 47 eingearbeitet werden können.

Der Werkzeugträgerbereich 6 hat eine im Horizontalabstand zum Werkstück-Drehtisch 14 angeordnete, auf dem Bett 10 ruhende vertikale Trägersäule 28, die an ihrem oberen Ende eine Führung 30 für einen zweiten Translationsschlitten 32 ausbildet. Die Führung 30 ist durch eine nicht näher gezeigte Antriebseinrichtung entlang einer zweiten, vertikalen Hauptachse Y bewegbar. Der Schlitten selbst hat über die Führung 30 einen Bewegungsfreiheitsgrad entlang einer dritten Bewegungs-Hauptachse Z, die auf der ersten und zweiten Hauptachse senkrecht steht.

Der zweite Translationsschlitten 32 trägt oberseitig einen Tisch 34 zur Lagerung eines Revolverkopfs 36 mit einer vertikalen Drehachse C. Diese vertikale Drehachse C ist eine programmgesteuerte Stellachse, um die einzelnen Revolverarme 38, 40, 42, 44 zeitlich gesteuert in eine einem Werkstück 46 zugeordnete Arbeitsposition zu bringen.

Jeder Revolverarm trägt auf einem radial außenliegenden Halterungsblock 48 einen Werkzeug-Drehtisch 50, dessen Drehachsen B₁ bis B₄ die vertikale Drehachse C des Revolverkopfs 36 rechtwinklig schneiden. Die in Figur 1 gezeigte Ausführungsform des Revolverkopfs 36 weist vier solcher Werkzeug-Drehtische 50 auf, deren jeweilige Drehachsen B₁ bis B₄ sich in einem Punkt auf der vertikalen Drehachse C des Revolverkopfs 36 schneiden.

Jeder Werkzeug-Drehtisch trägt seinerseits vorzugsweise lösbar angebrachte Aufnahmen 52₁ bis 52₄ für verschiedene Arbeitseinheiten 54₁ bis 54₄, wie z. B. Arbeitspinolen und/oder Arbeitsaggregate, wie z. B. für Meßvorrichtungen, Handhabungsgeräte oder dergleichen. Bei der in Figur 1 dargestellten Ausführungsform sind die Arbeitseinheiten durchwegs von Arbeitspinolen 54₁ bis 54₄ gebildet, die ein Fräswerkzeug 56₁, einen Meßtaster 56₂, eine Schleifscheibe 56₃ bzw. einen Bohrer 56₄ tragen. Die Werkzeuge der unterschiedlichen Arbeitseinheiten werden so ausgewählt und gestaltet, daß mit den verschiedenen Arbeitseinheiten unterschiedliche Bearbeitungsvorgänge am Werkstück 46 vorgenommen werden können. Die Schleifscheibe 56₃ kann beispielsweise eine Schleifscheibe mit quasi formvariablem Profil sein, bei der ein metallischer Trägerkörper eine CBN- (kubisches Bornitrid) Beschichtung trägt.

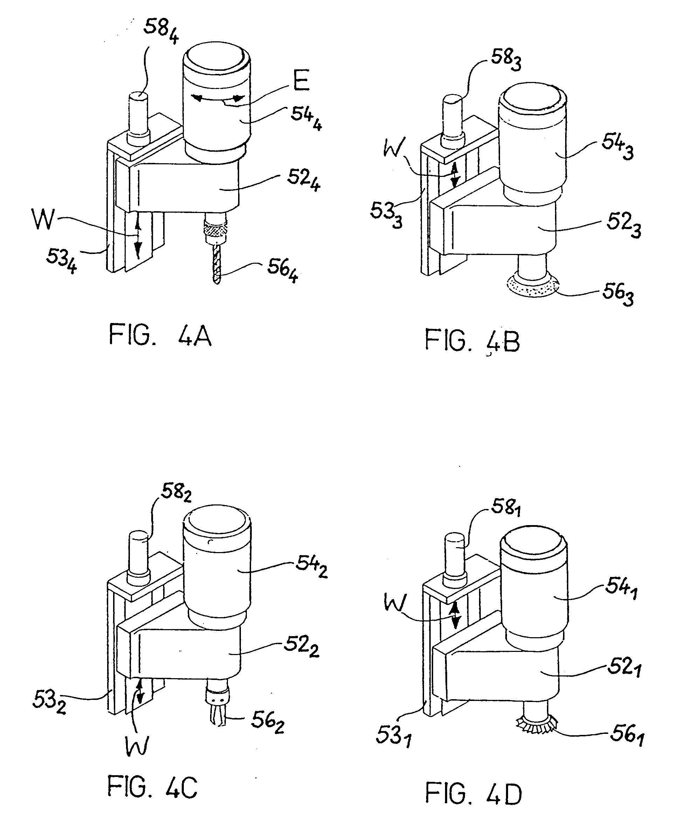

In den Figuren 4A bis 4D sind die verschiedenen Aufnahmen 52₁ bis 52₄ der Arbeitseinheiten 54₁ bis 54₄ gemäß Figur 1 separat dargestellt. Man erkennt aus diesen Darstellungen, daß die Aufnahmen 52₁ bis 52₄ identisch ausgebildet und auf einer Stellführung 53₁ bis 53₄ angeordnet sind. Die Verschiebung der Aufnahmen 52₁ bis 52₄ auf der Stellführung 53₁ bis 53₄ erfolgt beispielsweise über eine Einstellspindel 58₁ bis 58₄.

Allen Arbeitseinheiten, unabhängig davon, ob es sich um Arbeitspinolen oder um andere Arbeitsaggregate, wie z. B. Meßvorrichtungen, Handhabungsgeräte, Laser-Bearbeitungsvorrichtungen und dergleichen handelt, ist gemeinsam, daß sie entweder in der betreffenden Aufnahme 52 und/oder durch die Führung auf der Stellführung 53 entlang einer vierten Translationsachse W einstellbar sind, die die jeweilige Drehachse B des zugehörigen Werkzeug-Drehtischs 50 rechtwinklig schneidet. Die Translationsachse W kann dabei als reine Justierachse, aber auch als programmgesteuerte Stell- oder Simultanachse ausgebildet sein, wodurch es beispielsweise ermöglicht wird, mit der Arbeitspinole 54₄ Bohrvorgänge durchzuführen.

Es ist darüberhinaus möglich, im Bereich einer oder mehrerer Arbeitspinolen - in der Ausführungsform gemäß Figur 1 im Bereich der Pinole 54₄ - eine weitere programmgesteuerte Drehachse E vorzusehen, die als Stell- oder Simultanachse fungieren kann. In letzterem Falle ist es sogar möglich, mit der Arbeitseinheit Innengewinde-Schneidvorgänge am Werkstück durchzuführen.

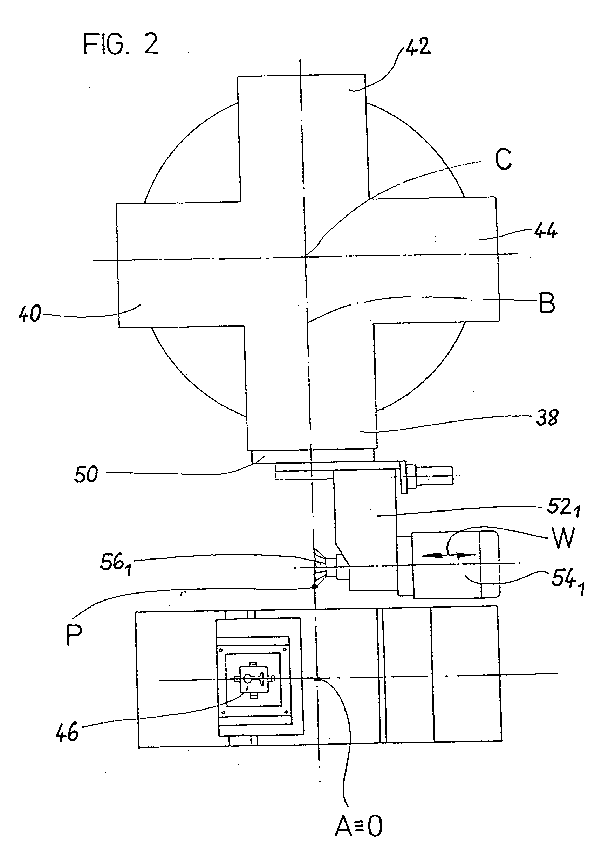

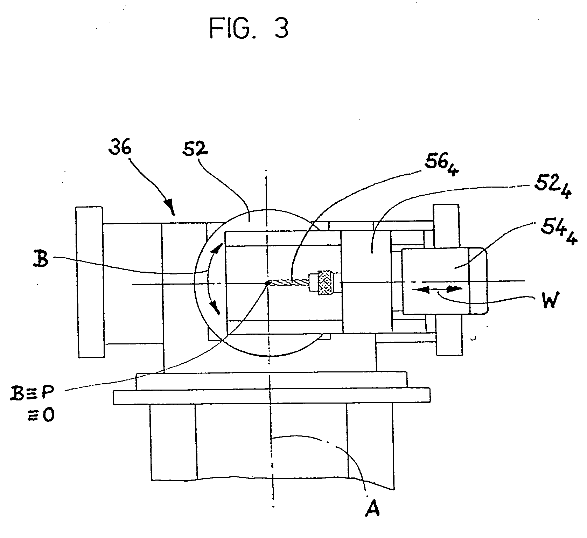

Der vorstehend beschriebene Aufbau der Werkzeugmaschine mit den Linear-Hauptachsen X, Y und Z, den Drehachsen A bis C und den weiteren linearen Bewegungsachsen U, V und W, die sämtlich programmgesteuert sind, eröffnet die Möglichkeit, Werkstücke beliebiger Gestaltung ohne Umspannung ausgehend vom Rohling bis zum fertigen Endprodukt programmgesteuert zu bearbeiten. Dabei kommt die Anzahl der programmgesteuerten Simultanachsen und die räumliche Zuordnung dieser Achsen einer wesentlichen Vereinfachung der Programmierung entgegen. Dies wird im folgenden unter ergänzender Bezugnahme auf die Figuren 2 und 3 näher erläutert:
In diesen Figuren ist der Revolverkopf 36 vereinfacht dargestellt, wobei jeweils nur das gerade im Einsatz befindliche Werkzeug gezeigt ist. Die Figur 2 zeigt den Revolverkopf 36 in der Position gemäß Figur 1. In Figur 3 ist der Revolverkopf um 90° im Uhrzeigersinn verschwenkt dargestellt. Die Besonderheit der Erfindung liegt darin, daß durch das Vorsehen und die Anordnung der Translationsachse W das Werkzeug, wie z. B. der Fräser 56₁, derart positioniert werden kann, daß der mit P bezeichnete Eingriffspunkt mit dem Werkstück einerseits in die Drehachse B des Werkzeug-Drehtischs 50 und andererseits in die vertikale Drehachse A des Werkstück-Drehtischs 14 bringbar ist. Dies wird dadurch zusätzlich erleichtert, daß der zweite Translationsschlitten 32 auf der Trägersäule 28 bewegbar ist, so daß genügend Freiraum zum Kreuztisch verbleibt, um die Verschiebung des Punktes P des Fräsers 56₁ in die Achse A zu ermöglichen. Es hat sich gezeigt, daß die Programmierbarkeit der Maschine dann wesentlich vereinfacht und die Arbeitsgenauigkeit zusätzlich angehoben werden kann, wenn die Programmierung der einzelnen, den vorstehend beschriebenen Achsen zugeordneten Antriebseinrichtungen ausgehend von einem sogenannten Programm-Nullpunkt O erfolgt, der den Schnittpunkt der Achsen A und B und zugleich den Eingriffspunkt P am entsprechend einjustierten Werkzeug darstellt. Der besondere Vorteil liegt insbesondere darin, daß sich der Eingriffspunkt P am Fräser 56₁ in keiner Weise ändert, wenn eine Bewegung der Arbeitseinheit 54 um die Drehachse B erfolgt. Hierdurch werden nicht nur komplexe Programmschritte zur exakten Lagebestimmung des Eingriffspunktes P relativ zu den übrigen Achsen entbehrlich, wodurch der Programmieraufwand bereits erheblich reduziert wird, sondern es wird darüberhinaus dafür gesorgt, daß das nachfolgend einzusetzende Arbeitsaggregat mit dem gleichen Ausgangs-Bezugspunkt zum Werkstück programmiert werden kann, wodurch die Arbeitsgenauigkeit angehoben wird.

Dieser Zusammenhang wird aus der Figur 3 verständlich, die den Revolverkopf 36 in einer gegenüber der Stellung gemäß Figur 2 um 90° im Uhrzeigersinn verschwenkten Stellung zeigt. Der Eingriffspunkt P zwischen dem Werkzeug, d. h. dem Bohrer 56₄, und dem Werkstück ist durch den zusätzlichen Freiheitsgrad entlang der vierten Translationsachse W in den Schnittpunkt der Achsen B und A bringbar, so daß für die Programmierung des nach dem Fräswerkzeug 56₁ in Eingriff kommenden Bohrwerkzeugs 56₄ der gleiche Bezugs-Nullpunkt dienen kann, der sich dadurch auszeichnet, daß eine Verschwenkbewegung des Arbeitsaggregats 54₄ um die Achse B keine komplexe Koordinatenverarbeitung erforderlich macht. Dadurch daß für die einzelnen, nacheinander in Eingriff gelangenden Arbeitsaggregate der gleiche Ausgangs-Bezugspunkt zum Werkstück als Ausgangspunkt für die Programmierung dienen kann, wird auch die Arbeitsgenauigkeit angehoben. Dies schafft die Voraussetzung dafür, als Arbeitseinheiten auch Meßstationen 54₂ und/oder Handhabungseinrichtungen am Revolverkopf vorzusehen, wodurch sogar die Möglichkeit eröffnet wird, durch Rückkopplung zwischen Meßstation und Arbeitseinheit korrigierend in den Bearbeitungsvorgang einzugreifen und dadurch das Werkstück 46 in einer Programmschleife so lange zu bearbeiten, bis der angestrebte Toleranzbereich erreicht ist. Die Arbeitsgenauigkeit wird zusätzlich dadurch angehoben, daß bedingt durch die gesteigerte Anzahl programmgesteuerter Simultanachsen bei einem bestimmten Bearbeitungsvorgang aus mehreren Bewegungsachsen die jeweils günstigsten, d. h. diejenigen, mit denen möglichst wenige Achsen aufeinander abgestimmt angesteuert werden müssen, ausgewählt werden können.

Die Meßstation 54₂ gemäß Figur 4C weist einen Meßtaster 56₂ auf, der entweder, zwischen den einzelnen Bearbeitungsvorgängen oder aber nach Abschluß sämtlicher Bearbeitungsschritte an das Werkstück 46 herangefahren wird, um eine Überprüfung der Maße vorzunehmen. Für die Programmierung des Meßsystems dient wiederum der Eingriffspunkt des Meßtasters 56₂ mit der angestrebten fertig bearbeiteten Werkstückfläche, die zur Programmierung der Bewegung des Meßtasters wiederum in den oben erwähnten Programm-Nullpunkt verlegt wird.

Der vorstehend beschriebene Aufbau der Werkzeugmaschine, erleichtert nicht nur die Programmierung der Bearbeitungsschritte und trägt auf diese Weise nicht nur zur Anhebung der Wirtschaftlichkeit des Bearbeitungsverfahrens bei, sondern er schafft auch die Voraussetzung für den Einsatz von extrem leistungsfähigen Werkzeugen, wie z. B. von Fräswerkzeugen und Hochgeschwindigkeits-Schleifwerkzeugen, bei denen erhebliche Kräfte von der Werkzeugmaschine abgefangen werden müssen. Denn die Haupt-Schnittkräfte liegen innerhalb der Maschinenführungen und sind sogar so gerichtet, daß die größten Komponenten zur Revolverkopfachse zeigen sind. Auf diese Art und Weise eignet sich die Werkzeugmaschine als universell einsetzbares Bearbeitungszentrum für Werkstücke unterschiedlichster Gestaltung und Größe. So ist es beispielsweise möglich, mit einem Aufspannvorgang Senkformen, Schnittwerkzeuge und sogar Turbinenschaufeln herzustellen. Die günstigere Schnittkrafteinleitung sorgt wiederum dafür, daß sich die gegenüber herkömmlichen Maschinen erhöhte Zahl von Bewegungsfreiheitsgraden nicht negativ auf die Positionierungsgenauigkeit auswirkt. Für die Halterung des Werkstücks können dann weitere Bewegungsachsen vorgesehen sein, die als programmgesteuerte Stell- oder Simultanachsen fungieren können.

Die Vielzahl der Arbeitseinheiten der Werkzeugmaschine benötigen selbstverständlich ein entsprechend komplexes Versorgungssystem, d. h. Versorgungsleitungen für die Hydraulik und die elektrische Anlage. Zu diesem Zweck ist oberhalb des Revolverkopfs 36 eine zentrale Energieversorgung vorgesehen, von der Einzelheiten aus der Figur 5 ersichtlich sind. Mit dem Bezugszeichen 60 ist ein an einem nicht näher dargestellten Gehäuse 62 des Bearbeitungszentrum befestigter Stützring bezeichnet, an dem sich ein Gleitteller 64 abstützt, der oberseitig die Verbindung zu einem nicht dargestellten Kabelschlepp herstellt. Der Stützteller weist Öffnungen für die elektrischen Steuerleitungen 66 und auf seiner Unterseite einen mittigen Gehäusefortsatz 68 auf, der als Verteiler für die hydraulischen Versorgungsleitungen 70 dient. Zusätzliche sind radiale Stützarme 72 vorgesehen, die zur Führung der Versorgungsleitungen 66 bzw. 70 zu den einzelnen Arbeitseinheiten hin dienen.

Der Stützteller 64 ist zusammen mit dem Gehäusefortsatz 68 antriebsmäßig mit dem Revolverkopf 36 gekoppelt. Zu diesem Zweck ist eine Teleskop-Wellenverbindung 74 vorgesehen, in die ein nicht näher dargestelltes Kardangelenk integriert ist, um die Mitnahme des Stütztellers 64 unabhängig von der Position des zweiten Translationsschlittens 32 zu halten. Diese Art der Energieversorgung eröffnet in vorteilhafter Weise die Möglichkeit, die Drehbewegung des Stütztellers 64 gleichzeitig dazu heranzuziehen, ein hydraulisches Wegeventil für die Hydraulik-Steuerleitungen 70 anzusteuern. Auf dieses Weise kann beispielsweise die Drehbewegung des Revolverkopfs 36 dazu dienen, immer nur diejenige Hydraulik-Versorgungsleitung 70 anzusteuern, die dem dem Werkstück zugewandten Revolverarm zugeordnet ist.

Die Schaltschritte des Revolverkopfs erfolgen vorteilhafterweise so, daß der Revolverkopf schrittweise in einer Drehrichtung um bis zu 270° verschwenkt wird, daß anschließend jedoch der Revolverkopf um über 270° in der entgegengesetzten Richtung verschwenkt wird, um die restlichen Arbeitseinheiten in Eingriff mit dem Werkstück zu bringen. Auf diese Weise können Schleifringkontakte, die bei einer CNC-Steuerung Fehlerquellen darstellen konnten, entfallen.

Um für jedes Arbeitsaggregat, das subzessive in Arbeitsposition gegenüber dem Werkstück gebracht wird, ein Höchstmaß an Positionierungsgenauigkeit bereitzustellen, ist es von Vorteil, wenn dem Revolverkopf 36 zusätzlich eine nicht näher dargestellte Indexiereinrichtung zugeordnet wird. Durch diese Maßnahme ergibt sich darüberhinaus der Vorteil, daß der Stellantrieb für den Revolverkopf unabhängig vor den maximal auftretenden Schnittkräften ausgelegt werden kann.

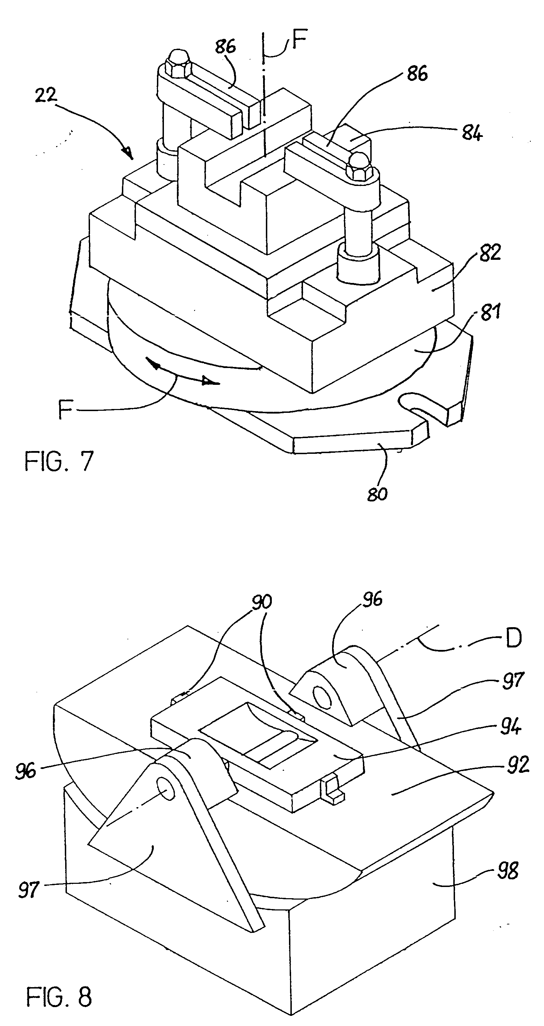

In Figur 7 ist eine weitere Variante einer Werkstückhalterung 22 dargestellt, die auf dem Kreuztisch 16 abnehmbar montiert werden kann. Zur Montage auf dem Kreuztisch 16 ist eine Grundplatte 80 vorgesehen, auf der über einen Brehteller 81 mit einer Drehachse F ein Spannblock 82 für das Werkstück 84 sitzt. Die eigentliche Spanneinrichtung wird von einer Spannpratzeneinrichtung 86 gebildet. Ebenso wie dies bei der Werkstückhalterung gemäß Figur 1 und 6 vorgesehen sein kann, ist somit beim Ausführungsbeispiel der Werkstückhalterung gemäß Figur 7 ein zusätzlicher programmgesteuerter Freiheitsgrad in Form der Drehachse F vorgesehen. Selbstverständlich kann dieser Bewegungsfreiheitsgrad auch eine andere Orientierung im Raum haben. Er sollte jedoch so orientiert sein, daß er in eine parallele Lage zu irgendeiner der Hauptachsen X, Y oder Z gebracht werden kann.

Eine weitere Abwandlung der Werkstückhalterung ist in Fig. 8 dargestellt. Das Wekstück 94 in Form eines Materialblocks, aus dem eine Reliefstruktur herausgearbeitet werden soll, ist von einer Spannklauenanordnung 90 an einem Spannblock 92 gehalten. Der Spannblock 92 weist zu beiden Seiten der Spannklauenanordnung Lagerklötze 96 für eine Schwenkachse D auf, die ortsfest in Lagerwangen 97 aufgenommen ist. Die Lagerwangen 97 sind an einem Halteblock 98 angebracht. Die Achse D, die als Justierachse, aber auch als programmgesteuerte Stell- oder Simultanachse ausgebildet sein kann, ist so gelegt, daß sie vorzugsweise durch die Mitte des Werkstücks, z.B. durch eine Haupt-Symmetrieachse des Werkstücks verläuft. Die Anordnung des Halteblocks 98 auf dem Kreuztisch ist derart gewählt, daß die Drehachse D mit einer programmgesteuerten Maschinenachse - bei der Ausführungsform gemäß Fig. 8 mit der Hauptachse Z - in Deckung bringbar ist, um den Programmablauf bei der Herstellung komplexer Funktionsflächen zu vereinfachen und die Zahl der Werkzeuge reduzieren zu können.

Selbstverständlich ist die Erfindung nicht auf das konkrete, in den Figuren dargestellte Ausführungsbeispiel beschränkt. Vielmehr sind Abwandlungen möglich, ohne den Gedanken der Erfindung zu verlassen. So ist es beispielsweise möglich, mit anderen Werkzeugen, wie z. B. mit Schleifstiften, Gewindebohrwerkzeugen oder Laser-Werkzeugen zu arbeiten. Ferner kann der Revolverarm andere Arbeitseinheiten, wie z. B. eine Lade- und Entladevorrichtung für Werkstücke, eine Einrichtung zum Wenden des bearbeiteten Teils oder ein Handhabungsgerät tragen. Schließlich können die Aufnahmen 52₁ bis 52₄ Adapter für die verschiedenen Arbeitsaggregate tragen, um die Anschlüsse dieser verschiedenen Geräte zu vereinfachen.

Darüberhinaus kann auch der Revolverkopf abweichend von der Darstellung gemäß Figur 1 bis 3 mit mehr oder weniger Revolverarmen ausgestattet sein, um die Maschine an das vorherrschende Einsatzgebiet anzupassen. Wenn bei der Fertigung eines Werkstücks aufgrund der Komplexität der Formgebung ein extrem häufiges Wechseln der Arbeitsaggregate erforderlich ist, wird es von Vorteil sein, die Anzahl der Revolverarme auf drei zu beschränken. In der Zeit, in der sich ein Arbeitsaggregat in Eingriff mit dem Werkstück befindet, können dann an den beiden weiteren freien Stationen Umrüstarbeiten vorgenommen werden. Für den Einsatz des Bearbeitungszentrums in der Produktion von größeren Serien dürfte es jedoch von Vorteil sein, mit vier Revolverarmen zu arbeiten, da sich herausgestellt hat, daß mit dieser Anzahl von Arbeitseinheiten sämtliche Bearbeitungsvorgänge in einem Aufspannvorgang durchgeführt werden können, wenn eine geeignete Bestückung mit Werkzeugen vorgenommen wird. In diesem Zusammenhang ist es von Vorteil, daß die Revolverarme des erfindungsgemäßen Bearbeitungszentrums gleichberechtigt strukturiert sind, so daß auch die zeitliche Folge des Eingriffs verschiedener Arbeitsaggregate in keiner Weise auf eine bestimmte Struktur beschränkt ist.

Die Erfindung schafft somit eine programmgesteuerte Werkzeugmaschine zur Bearbeitung von Werkstücken mittels rundlaufender Werkzeuge, die zeitlich gesteuert in Eingriff mit einem Werkstück bringbar sind. Das Werkstück befindet sich auf einem Kreuztisch, der auf einem programmgesteuerten Werkstück-Drehtisch sitzt, der seinerseits entlang einer ersten Hauptachse geführt ist. Der Werkzeugträgerbereich weist eine vertikale Trägersäule auf, die oberseitig einen in der vertikalen Richtung verstellbaren und quer dazu bewegbaren weiteren Translationsschlitten mit Werkzeug-Halterungen trägt. Die Halterungen sind von einem Revolverkopf gebildet, dessen Drehachse mit der vertikalen Bewegungsachse des weiteren Translationsschlittens zusammenfällt und mindestens zwei programmgesteuerte Werkzeug-Drehtische aufweist, deren Drehachsen die Drehachse des Revolverkopfs in einem Punkt senkrecht schneiden. Die Werkzeug-Drehtische sind ebenfalls programmgesteuert und tragen Aufnahmen für verschiedene Arbeitseinheiten, wie z. B. Arbeitspinolen und/oder zusätzliche Arbeitsaggregate, die jeweils entlang einer vierten Translationsachse einstellbar sind, die senkrecht auf der Drehachse des jeweiligen Werkzeug-Drehtischs steht. Die Drehachse des Revolverkopfs stellt eine programmgesteuerte Stellachse dar, so daß die einzelnen Arbeitseinheiten schrittweise in Eingriff mit dem Werkstück bringbar sind, das somit ohne die Aufspannung zu ändern in einem Arbeitsgang vom Rohling zum Fertigprodukt bearbeitet werden kann. Auf diese Weise wird ein universell einsetzbares Bearbeitungszentrum geschaffen, das sich durch den neuen Aufbau durch eine vereinfachte Programmierbarkeit und eine hohe Bearbeitungspräzision auszeichnet.

## Patentansprüche

1. Werkzeugmaschine zur Bearbeitung von Werkstücken (46) mittels rundlaufender Werkzeuge, wie zum Beispiel Schleif- oder Fräswerkzeuge, die zeitlich gesteuert in Eingriff mit einem Werkstück (46) bringbar sind, mit
einem Werkstückbereich (4) und Werkzeugträgerbereich (6), von denen
der Werkstückbereich (4) einen auf einem Bett (8) horizontal entlang einer ersten Hauptachse (X) geführten ersten Translationsschlitten (12) auf dem über einen Werkstück-Drehtisch (14) mit vertikaler Drehachse (A) ein Kreuztisch (16) mit zwei zueinander senkrechten Bewegungsachsen (U und V) zur Aufnahme des Werkstücks (46) sitzt, und
der Werkzeugträgerbereich (6) eine im Horizontalabstand zum Werkstück-Drehtisch (14) angeordnete Trägersäule (28) aufweist, die oberseitig einen entlang einer zweiten, vertikalen Hauptachse (Y) geführten zweiten Translationsschlitten (32) mit einer auf der ersten und der zweiten Hauptachse (X, Y) senkrechten dritten Bewegungs-Hauptachse (Z) trägt, wobei
der Zweite Translationsschlitten (32) eine um eine mit der zweiten Hauptachse (Y) zusammenfallende, programmgesteuerte Drehachse (C) drehbare Halterung zur Lagerung eines Werkzeug-Drehtischs (50) trägt, dessen Drehachse (B) die zweite Hauptachse (Y) im rechten Winkel schneidet, und
eine Programmsteuerung vorgesehen ist, mit der sämtliche Bewegungsachsen unabhängig voneinander ansteuerbar sind,
dadurch gekennzeichnet, daß
die Halterung von einem Revolverkopf (36 bis 44) gebildet ist, der zumindest zwei programmgesteuerte Werkzeug-Drehtische (50), deren Drehachsen (B₁, B₂, B₃ bzw. B₄) die Drehachse (C) des Revolverkopfs alle in einem Punkt senkrecht schneiden , sowie die Aufnahmen (52₁ bis 52₄) für verschiedene Arbeitseinheiten, wie zum Beispiel Arbeitspinolen (54₁ bis 54₄) und zusätzliche Arbeitsaggregate, beispielsweise Meßeinrichtungen, Handhabungsgeräte oder dergleichen, aufweist, die jeweils entlang einer zusätzlichen, von den Hauptachsen (X, Y, Z) verschiedenen vierten Translationsachse (W), die senkrecht auf der Drehachse (B) des Werkzeug-Drehtischs (50) steht, einstellbar sind, so daß der Eingriffspunkt (P) der jeweiligen Arbeitseinheit (54₁ bis 54₄) mit dem Werkstück (46) in die Drehachse (B) des Werkzeug-Drehtisches (50) bringbar ist.

2. Werkzeugmaschine nach Anspruch 1, dadurch gekennzeichnet, daß die Aufnahmen (52₁ bis 52₄) lösbar am Werkzeug-Drehtisch (50) befestigt sind.

3. Werkzeugmaschine nach Anspruch 1 oder 2, dadurch gekennzeichnet, daß die Aufnahmen (52₁ bis 52₄) derart an die darin aufzunehmenden Arbeitseinheiten (54₁ bis 54₄) angepaßt sind, daß die jeweiligen Eingriffspunkte (P) der Arbeitseinheiten mit dem Werkstück (46) in den Schnittpunkt (O) der Drehachsen (A, B) des Werkstück-Drehtischs (14) und des betreffenden Werkzeug-Drehtischs (50) bringbar sind.

4. Werkzeugmaschine nach einem der Ansprüche 1 bis 3, dadurch gekennzeichnet, daß die vierte Translationsachse (W) als programmgesteuerte Simultanachse ausführbar ist.

5. Werkzeugmaschine nach Anspruch 4, dadurch gekennzeichnet, daß zumindest eine Aufnahme (52) des Revolverkopfs (36) eine weitere programmgesteuerte Drehachse (E) hat, die entlang der vierten Translationsachse (W) orientiert ist.

6. Werkzeugmaschine nach einem der Ansprüche 1 bis 5, gekennzeichnet durch eine Einrichtung zum selbsttätigen Wechseln der Arbeitseinheiten (52,54) in der Weise, daß die Eingriffspunkte (P) der Arbeitseinheiten mit dem Werkstück (46) in den Schnittpunkt (O) der Drehachsen (A, B) des Werkstück-Drehtischs (14) und des betreffenden Werkzeug-Drehtischs (50) bringbar sind.

7. Werkzeugmaschine nach einem der Ansprüche 1 bis 6, dadurch gekennzeichnet, daß der Kreuztisch (16) eine auswechselbare Spanneinrichtung (24; 82) trägt.

8. Werkzeugmaschine nach Anspruch 7, dadurch gekennzeichnet, daß der Spanneinrichtung (24; 82;92 bis 98) zumindest ein zusätzlicher programmgesteuerter Freiheitsgrad (F;D) zugeordnet ist.

9. Werkzeugmaschine nach Anspruch 8, dadurch gekennzeichnet, daß durch den zumindest einen weiteren Freiheitsgrad (F;D) der Spanneinrichtung das Werkstück definiert zu einer programmgesteuerten Maschinenachse ausrichtbar ist.

10. Werkzeugmaschine nach einem der Ansprüche 7 bis 9, dadurch gekennzeichnet, daß die Spanneinrichtung( 92 bis 98) zusätzlich eine Drehachse (D;F) hat, die vorzugsweise mit einer Werkstück-Hauptachse zusammenfällt.

11. Werkzeugmaschine nach einem der Ansprüche 1 bis 10, dadurch gekennzeichnet, daß zumindest eine der Arbeitspinolen (54₁ bis 54₄) mehrere axial versetzte Werkzeuge trägt und der jeweilige Werkzeug-Eingriffspunkt über die vierte Translationsachse (W) einstellbar ist.

12. Werkzeugmaschine nach einem der Ansprüche 1 bis 11, dadurch gekennzeichnet, daß oberhalb des Revolverkopfs (36) eine diesen zentral versorgende Energie-Versorgungseinrichtung (64, 68) vorgesehen ist.

13. Werkzeugmaschine nach einem der Ansprüche 1 bis 12, dadurch gekennzeichnet, daß als Arbeitseinheiten Lade-und Entladevorrichtungen für das Werkstück vorgesehen sind.

14. Werkzeugmaschine nach einem der Ansprüche 1 bis 13, dadurch gekennzeichnet, daß als Arbeitseinheiten Werkstück-Wendevorrichtungen vorgesehen sind.

15. Werkzeugmaschine nach einem der Ansprüche 1 bis 14, dadurch gekennzeichnet, daß als Arbeitseinheiten Meßeinrichtungen (56₂) vorgesehen sind.

16. Werkzeugmaschine nach einem der Ansprüche 1 bis 15, dadurch gekennzeichnet, daß als Arbeitseinheiten Schleifscheibenaggregate, insbesondere Hochgeschwindigkeits-Schleifscheibenaggregate vorgesehen sind.

17. Werkzeugmaschine nach einem der Ansprüche 1 bis 16, dadurch gekennzeichnet, daß als Arbeitseinheiten Fräs- und/oder Bohr- und/oder Gewindeschneidaggregate vorgesehen sind.

18. Werkzeugmaschine nach einem der Ansprüche 1 bis 17, dadurch gekennzeichnet, daß als Arbeitseinheiten Laser-Bearbeitungsaggregate vorgesehen sind.

19. Werkzeugmaschine nach einem der Ansprüche 1 bis 18, gekennzeichnet durch eine Meß-Steuereinrichtung, mit der in Abhängigkeit von einem Steuersignal des Meßaggregats korrigierend auf den Arbeitsablauf des vorangegangenen Bearbeitungsschritts eingegriffen werden kann.

20. Werkzeugmaschine nach einem der Ansprüche 1 bis 19, dadurch gekennzeichnet, daß der Revolverkopf (36) vier Revolverarme (38 bis 44) aufweist, auf denen jeweils eine Aufnahme (52₁ bis 52₄) für die Arbeitseinheiten (54₁ bis 54₄) sitzt.

21. Werkzeugmaschine nach einem der Ansprüche 1 bis 20, gekennzeichnet durch eine Indexiereinrichtung für den Revolverkopf (36).

22. Werkzeugmaschine nach einem der Ansprüche 1 bis 21, dadurch gekennzeichnet, daß als Arbeitseinheit eine Schleifscheiben-Abrichtvorrichtung vorgesehen und die abzurichtende Schleifscheibe in einer Werkstück-Spanneinrichtung aufgenommen ist.

## Claims

1. A machine tool for machining workpieces (46) by means of rotary tools, such as grinding or milling tools, which can be brought into engagement with a workpiece (46) under timewise control, said machine tool comprising
a workpiece region (4) and a tool support region (6) of which
the workpiece region (4) comprises a first translational carriage (12) guided horizontally on a machine bed (8) along a first main axis (X), above which carriage (12) a rotatable workpiece table (14) having a vertical axis of rotation (A) is arranged, carrying a cross table (16) with two movement axes (U and V) perpendicular to each other for receiving the workpiece (46), and
the tool support region (6) comprises a support post (28) spaced horizontally from the rotatable workpiece table (14), the support post carrying at its upper side a second translational carriage (32) which is guided along a second vertical main axis (Y) and comprises a third main movement axis (Z) perpendicular to the first and second main axis (X, Y), wherein
the second translational carriage (32) carries a mounting rotatable about a program-controlled axis of rotation (C) coinciding with the second main axis (Y), for supporting a rotatable tool table (50) the axis of rotation (B) whereof intersects the second main axis (Y) at right angles, and
a program control is provided by which all axes of rotation can be controlled independently of each other,
**characterized in that**
the mounting is formed by a revolving head (36 to 44) comprising at least two program-controlled rotatable tool tables (50) the axes of rotation whereof (B₁, B₂, B₃ and B₄) all perpendicularly intersect the axis of rotation (C) of the revolving head at a single point, further comprising the holding members (52₁ to 52₄) for different working units such as, working spindle sleeves (54₁ to 54₄) and auxiliary working assemblies, for instance, measuring devices, hand manipulating devices or the like, these being respectively adjustable along an additional fourth translational axis (W) which differs from the main axes (X, Y, Z) and is perpendicular to the axis of rotation (B) of the rotatable tool table (50), so that the point of engagement (P) of the respective working unit (54₁ to 54₄) with the workpiece (46) can be brought into the axis of rotation (B) of the rotatable tool table (50).

2. A machine tool according to claim 1, **characterized in that** the holding members (52₁ to 52₄) are releasably attached to the rotatable tool table (50).

3. A machine tool according to claim 1 or 2, **characterized in that** the holding members (52₁ to 52₄) are adapted to the working units (54₁ to 54₄) to be held therein such that the respective points of engagement (P) of the working units with the workpiece (46) can be brought into the intersection point (O) of the axes of rotation (A, B) of the rotatable workpiece table (14) and the respective rotatable tool table (50).

4. A machine tool according to one of the claims 1 to 3, **characterized in that** the fourth translational axis (W) can be a program-controlled simultaneous axis.

5. A machine tool according to claim 4, **characterized in that** at least one holding member (52) of the revolving head (36) has a further program-controlled axis of rotation (E) which is oriented along the fourth translational axis (W).

6. A machine tool according to one of the claims 1 to 5, **characterized by** a means for automatically changing the working units (52, 54) in the manner that the points of engagement (P) of the working units with the workpiece (46) can be brought into the intersection point (O) of the axes of rotation (A, B) of the rotatable workpiece table (14) and the respective rotatable tool table (50).

7. A machine tool according to one of the claims 1 to 6, **characterized in that** the cross table (16) carries a replaceable clamping device (24; 82).

8. A machine tool according to claim 7, **characterized in that** at least one additional program-controlled degree of freedom (F; D) is associated with the clamping device (24; 82; 92 to 98).

9. A machine tool according to claim 8, **characterized in that** due to the at least one further degree of freedom (F; D) of the clamping means the workpiece can be definitely oriented with respect to a program-controlled machine axis.

10. A machine tool according to one of the claims 7 to 9, **characterized in that** the clamping device (92 to 98) additionally has an axis of rotation (D; F) which preferably coincides with a main axis of the workpiece.

11. A machine tool according to one of the claims 1 to 10, **characterized in that** at least one of the working spindle sleeves (54₁ to 54₄) bears several axially displaced workpieces, and that the respective point of engagement with the workpiece can be adjusted via the fourth translational axis (W).

12. A machine tool according to one of the claims 1 to 11, **characterized in that** an energy supply device (64, 68) is provided above the revolving head (36) to centrally supply the head with energy.

13. A machine tool according to one of the claims 1 to 12, **characterized in that** mounting and de-mounting devices for the workpiece are provided as working units.

14. A machine tool according to one of the claims 1 to 13, **characterized in that** devices for inverting the workpiece are provided as working units.

15. A machine tool according to one of the claims 1 to 14, **characterized in that** measuring devices (56₂) are provided as working units.

16. A machine tool according to one of the claims 1 to 15, **characterized in that** grinding wheel assemblies, particularly high speed grinding wheel assemblies, are provided as working units.

17. A machine tool according to one of the claims 1 to 16, **characterized in that** milling and/or drilling and/or thread-cutting devices are provided as working units.

18. A machine tool according to one of the claims 1 to 17, **characterized in that** laser machining devices are provided as working units.

19. A machine tool according to one of the claims 1 to 18, **characterized by** a measurement control device by which, in accordance with a control signal of the measuring device, a correcting intervention can be applied to the operating sequence of the preceding maching step.

20. A machine tool according to one of the claims 1 to 19, **characterized in that** the revolving head (36) comprises four revolving arms (38 to 44) each of which bears a holding member (52₁ to 52₄) for the working units (54₁ to 54₄).

21. A machine tool according to one of the claims 1 to 20, **characterized by** an indexing device for the revolving head (36).

22. A machine tool according to one of the claims 1 to 21, **characterized in that** a grinding wheel truing device is provided as a working unit, and that the grinding wheel to be trued is held in a clamping device for workpieces.

## Revendications

1. Machine-outil pour l'usinage de pièces (46) avec des outils rotatifs, tels que par exemple des outils de meulage ou de fraisage, pouvant être amenés en contact avec une pièce (46) sous l'action d'une commande temporelle, avec
une zone de pièce (4) et une zone de porte-outil (6), dont
la zone de pièce (4) sert de siège à un premier chariot de translation (12), guidé horizontalement sur un banc (8), le long d'un premier axe principal (X), chariot (12) sur lequel repose, par l'intermédiaire d'une table tournante (14) à axe de rotation (A) vertical, une table à mouvements croisés (16) avec deux axes de déplacement (U et V) mutuellement perpendiculaires, pour recevoir la pièce (46), et
la zone de porte-outil (6) présentant une colonne support (28), disposée à distance horizontale de la table tournante (14), portant en face supérieure un deuxième chariot de translation (32), guidé le long d'un deuxième axe principal (Y) vertical avec un troisième axe principal de déplacement (Z) perpendiculaire au premier et au deuxième axes principaux (X, Y),
le deuxième chariot de translation (32) portant une fixation susceptible de tourner autour d'un axe de rotation (C) sous commande programmable, rencontrant le deuxième axe principal (Y) pour faire tourillonner une table tournante pour outils (50), dont l'axe de rotation (B) coupe perpendiculairement le deuxième axe principal (Y), et
une commande programmable étant prévue à l'aide de laquelle l'ensemble des axes de déplacement peuvent être commandés, indépendamment les uns des autres,
caractérisé en ce que
la fixation est constituée d'une tête revolver (36 à 44), présentant au moins deux tables tournantes (50), sous commande programmable, dont les axes de rotation (B₁, B₂, B₃ ou B₄) coupent tous l'axe de rotation (C) de la tête revolver à angle droit en un point, ainsi que présentant les logements (52₁ à 52₄) destinés aux différentes unités opératoires, telles que par exemple des broches opératoires (54₁ à 54₄) et des ensembles opératoires supplémentaires, par exemple des dispositifs de mesure, des appareils de manipulation ou analogues, susceptibles chacun d'être réglés le long d'un quatrième axe de translation (W), supplémentaire, différent des axes principaux (X, Y, Z), orienté perpendiculairement par rapport à l'axe de rotation (B) de la table tournante pour outils (50), de sorte que le point d'action (P) de l'unité opératoire (54₁ à 54₄) respective avec la pièce façonnée (46) puisse être placé sur l'axe de rotation (B) de la table tournante pour outils (50).

2. Machine-outil selon la revendication 1, caractérisée en ce que les logements (52₁ à 52₄) sont fixés de façon démontable sur la table tournante pour outils (50).

3. Machine-outil selon la revendication 1 ou 2, caractérisée en ce que les logements (52₁ à 52₄) sont adaptés aux unités opératoires (54₁ à 54₄) devant y être logées de manière que les points d'action (P) respectifs des unités opératoires avec les pièces façonnées (46) peuvent être placés au point d'intersection (O) des axes de rotation (A, B) de la table tournante (14) et de la table tournante pour outils (50) concernée.

4. Machine-outil selon l'une des revendications 1 à 3, caractérisée en ce que le quatrième axe de translation (W) peut être mis en oeuvre comme axe simultané à commande programmable.

5. Machine-outil selon la revendication 4, caractérisée en ce qu'au moins un logement (52) de la tête revolver (36) comporte un autre axe de rotation (E) à commande programmable, orienté le long du quatrième axe de rotation (W).

6. Machine-outil selon l'une des revendications 1 à 5, caractérisée par un dispositif permettant le changement automatique des unités opératoires (52, 54), de manière que les points d'action (P) des unités opératoires avec les pièces façonnées (46) puissent être placés au point d'intersection (O) des axes de rotation (A, B) de la table tournante pour pièces façonnées (14) et de la table tournante pour outil (50).

7. Machine-outil selon l'une des revendications 1 à 6, caractérisée en ce que la table à mouvement croisés (16) porte un dispositif de serrage (24; 82) interchangeable.

8. Machine-outil selon la revendication 7, caractérisée en ce qu'au moins un degré de liberté supplémentaire (F; D) à commande programmable est associé au dispositif de serrage (24; 82; 92 à 98).

9. Machine-outil selon la revendication 8, caractérisée en ce que la pièce façonnée est orientable de façon définie par rapport à un axe machine à commande programmable, au moyen du au moins un degré de liberté supplémentaire (F; D) du dispositif de serrage.

10. Machine-outil selon l'une des revendications 7 à 9, caractérisée en ce que le dispositif de serrage (92 à 98) comporte en plus un axe de rotation (D; F) coïncidant de préférence avec un axe principal de la pièce façonnée.

11. Machine-outil selon l'une des revendications 1 à 10, caractérisée en ce qu'au moins l'une des broches opératoires (54₁ à 54₄) porte plusieurs outils, décalés axialement, et le point d'action spécifique de l'outil étant réglable, par l'intermédiaire du quatrième axe de translation (W).

12. Machine-outil selon l'une des revendications 1 à 11, caractérisée en ce qu'un dispositif d'alimentation en énergie (64, 68) alimentant centralement la tête revolver (36) est prévu au-dessus de ce dernier.

13. Machine-outil selon l'une des revendications 1 à 12 caractérisée en ce que sont prévues comme unités opératoires des dispositifs de chargement et de déchargement de la pièce façonnée.

14. Machine-outil selon l'une des revendications 1 à 13, caractérisée en ce que sont prévues comme unités opératoires des dispositifs de retournement de la pièce façonnée.

15. Machine-outil selon l'une des revendications 1 à 14, caractérisée en ce que sont prévues comme unités opératoires des dispositifs de mesure (56₂).

16. Machine-outil selon l'une des revendications 1 à 15, caractérisée en ce que sont prévues comme unités opératoires des groupes de meulage à meule-disque, en particulier des groupes de meulage à meule-disque travaillant à grande vitesse.

17. Machine-outil selon l'une des revendications 1 à 16, caractérisée en ce que sont prévues comme unités opératoires des groupes de fraisage et/ou de perçage et/ou de filetage-taraudage.

18. Machine-outil selon l'une des revendications 1 à 17, caractérisée en ce que sont prévues comme unités opératoires des groupes d'usinage à laser.

19. Machine-outil selon l'une des revendications 1 à 18, caractérisée par un dispositif de commande de mesure, à l'aide duquel, en fonction d'un signal de commande du groupe de mesure, on peut opérer une correction du déroulement opératoire de l'étape d'usinage en cours d'exécution.

20. Machine-outil selon l'une des revendications 1 à 19, caractérisée en ce que la tête revolver (36) présente quatre bras de revolver (38 à 44), sur lesquels est ménagé chaque fois un logement (524₁ à 52₄) pour les unités opératoires (54₁ à 54₄).

21. Machine-outil selon l'une des revendications 1 à 20, caractérisée par un dispositif d'indexation pour la tête revolver (36).

22. Machine-outil selon l'une des revendications 1 à 21, caractérisée en ce qu'est prévue comme unité opératoire un dispositif de dressage de meule-disque, le disque de meulage à dresser étant supporté dans un dispositif de serrage de pièce façonnée.
